# EUROPÄISCHE PATENTSCHRIFT

(11) **EP 0 817 666 B1**
(45) Veröffentlichungstag und Bekanntmachung des Hinweises auf die Patenterteilung: **06.10.1999**
(21) Anmeldenummer: 96908041.5
(22) Anmeldetag: 14.03.1996
(51) Int. Cl.: B01D 24/12, B01D 24/22, B01D 17/04, B01D 37/02, C02F 3/30

(54) **VERFAHREN ZUR FEST-FLÜSSIG-TRENNUNG UND/ODER EMULSIONSSPALTUNG**
METHOD OF SEPARATING SOLIDS FROM LIQUIDS AND/OR SEPARATING EMULSIONS
PROCEDE DE SEPARATION SOLIDE-LIQUIDE ET/OU DE RUPTURE D'EMULSION

(30) Priorität: 15.03.1995 DE 19509367
(43) Veröffentlichungstag der Anmeldung: 14.01.1998
(73) Patentinhaber: Linde Aktiengesellschaft, 65189 Wiesbaden (DE); CT Umwelttechnik GmbH, 35510 Butzbach (DE)
(72) Erfinder: FUCHS, Uwe, 80689 München (DE)
(74) Vertreter: Kasseckert, Rainer
(86) Internationale Anmeldenummer: EP9601112
(87) Internationale Veröffentlichungsnummer: WO9628233

(56) Entgegenhaltungen:
- EP-A- 0 531 586
- EP-A- 0 627 387
- WO-A-89/02776
- DE-A- 2 916 121
- DE-A- 4 010 526
- US-A- 5 114 595
- PATENT ABSTRACTS OF JAPAN vol. 95, no. 003 & JP,A,07 068293 (KURITA WATER IND LTD), 14.März 1995,

## Beschreibung

Die Erfindung betrifft ein Verfahren zur Fest-Flüssig-Trennung von feststoffhaltigen Flüssigkeiten und/oder zur Spaltung von Emulsionen, wobei die feststoffhaltige Flüssigkeit und /oder Emulsion durch eine aus losen, im wesentlichen planarem Filterteilchen mit einer Fläche von ca. 5 mm² bis ca. 1000 mm² bestehende Filterschicht hindurch geleitet wird, die in einem Filterbehälter mittels mindestens eines Siebes zurückgehalten wird, wobei zumindest ein Großteil der Feststoffe und/oder emulgierten Tröpfchen auf den Filterteilchen abgeschieden wird, während die verbleibende Flüssigkeit nach Passieren der Filterschicht über das Sieb aus dem Filterbehälter abgezogen wird.

Bekannt sind Verfahren zur Raumfiltration, bei denen eine feststoffhaltige Flüssigkeit durch eine mineralische Filterschicht, z.B. aus Sand oder Kies, hindurchgeleitet wird. Derartige mineralische Filterschichten sind zwar kostengünstig, weisen aber eine Reihe von Nachteilen auf:

Die Filterschicht besteht aus Teilchen mit hohem spezifischen Gewicht, wodurch eine sehr stabile Bauweise der gesamten Filtrationseinheit notwendig wird. Außerdem erfordert das hohe spezifische Gewicht der bekannten mineralischen Filterschichten einen sehr hohen Energieaufwand beim Regenerieren der Filterschicht. Es sind sehr leistungsstarke Regenerieraggregate erforderlich. Die bekannten mineralischen Filterschichten weisen darüber hinaus ein geringes Hohlraumvolumen in der Größenordnung von 25 bis 30 Vol% auf, wobei eine geringe Beladungskapazität von ca. 5 kg Trockensubstanz pro Kubikmeter resultiert. Dadurch ist eine häufige Regenerierung der Filterschicht notwendig. Wegen des geringen Teilchendurchmessers der bekannten Filterteilchen sind aufwendige Rückhaltevorrichtungen erforderlich.

Häufig ist auch eine simultane biologische Behandlung der zu filtrierenden Flüssigkeit wünschenswert. In der Praxis scheitert die Durchführung der simultanen biologischen Reinigung jedoch meist daran, daß die auf den relativ glatten Filterteilchen angesiedelte Biomasse beim Regenerieren und partiellen Belüften der Filterschicht aus der Filtrationseinheit ausgetragen wird.

Oft ist es auch notwendig, Emulsionen, insbesondere Kohlenwasserstoff-WasserEmulsionen aufzuspalten. Beispielsweise ist Erdöl häufig in Gesteinsporen eingeschlossen. Zur Gewinnung des Erdöls wird Wasser in das Gestein eingepreßt und das Erdöl mit dem Wasser zur Erdoberfläche gefördert. Anschließend wird das Erdöl vom Wasser abdekantiert, wobei allerdings noch eine Erdöl-Wasser-Emulsion als Rest übrigbleibt.

Bisher ist eine Spaltung derartiger Emulsionen mit einem erheblichen Aufwand verbunden. Darüber hinaus wird meist keine zufriedenstellende Ausbeute erzielt.

Aus der DE-A- 2 916 121 ist ein Filtrationsverfahren bekannt, bei dem ein Filterbett aus losen Filterteilchen aus porösem Polyurethanschaumstoff eingesetzt wird. Die Filterteilchen können in geschreddeter Form mit einer Teilchengröße von 25 bis 51 mm und einer Teilchendicke von 0,6 mm vorliegen. Die Dichte der Filterteilchen wird so gewählt, daß ein Filterbett mit ausreichender Festigkeit gebildet wird. Dadurch wird verhindert, daß die Filterteilchen während des Filtrationsvorgangs hochgeschwemmt werden. Deshalb ist die Beweglichkeit der einzelnen Filterteilchen sehr stark eingeschränkt, wodurch die Filtrationsleistung beeinträchtigt wird.

Der vorliegenden Erfindung liegt die Aufgabe zugrunde, ein Verfahren zur Fest-Flüssig-Trennung und/oder zur Spaltung von Emulsionen zur Verfügung zu stellen, mit dem die beschriebenen Nachteile der bisherigen Verfahren vermieden werden können.

Diese Aufgabe wird erfindungsgemäß dadurch gelöst, daß aus leicht fluidisierbaren, folienartigen Filterteilchen mit einer Dicke von ca. 15 µm bis ca. 500 µm und einem Flächengewicht von ca. 10 bis 500 g/m² eine lose Filterschicht aus gegeneinander leicht beweglichen Filterteilchen gebildet wird.

Aufgrund ihrer lamellenartigen, konfettiähnlichen Struktur weisen die Filterteilchen ein gutes Abscheidevermögen auf. Bei einem niedrigen spezifischen Gewicht von vorzugsweise 1 g/cm³ sind die Filterteilchen leicht fluidisierbar und bilden eine quasi schwebende Filterschicht aus gegeneinander leicht beweglichen Filterteilchen. Außerdem weist die aus den Filterteilchen gebildete Filterschicht ein großes Hohlraumvolumen von ca. 75 Vol% auf, wodurch eine sehr hohe Beladungskapazität erreicht wird. Dies hat zur Folge, daß die Filterschicht seltener regeneriert werden muß. Die erfindungsgemäß vorgeschlagene Teilchengröße der Filterteilchen ermöglicht außerdem eine einfache Zurückhaltung der Filterteilchen durch Siebe.

Durch das Flächengewicht der Filterteilchen von ca. 10 bis 500 g/m² wird sichergestellt, daß die Filterteilchen innerhalb der Filterschicht beweglich sind, wodurch die Filtrationsleistung erhöht wird. Außerdem können die Filterteilchen beim Regenerieren der Filterschicht leicht aufgewirbelt werden.

Beim Regenerieren der Filterschicht können die leichten, folienartigen Filterteilchen ohne großen Energieaufwand durch leichte und schwache Regenerieraggregate aufgewirbelt werden, so daß die in der Filterschicht zurückgehaltenen Feststoffe und/oder die auf den Filterteilchen abgeschiedenen Emulsionströpfchen in die Flüssigkeit übergehen. Die mit Feststoffen und/oder emulgierten Tröpfchen angereicherte Flüssigkeit wird anschließend aus dem Filterbehälter abgezogen.

Zum Regenerieren der Filterschicht wird üblicherweise der Abzug der Flüssigkeit aus dem Filterbehälter zunächst unterbrochen, anschließend werden die Filterteilchen aufgewirbelt, wobei zumindest ein Großteil der Feststoffe und/oder emulgierten Tröpfchen in die Flüssigkeit übergeht, und anschließend wird die mit Feststoffen und/oder emulgierten Tröpfchen angereicherte Flüssigkeit aus dem Filterbehälter abgezogen.

Da die Filterteilchen mittels Sieben zurückgehalten werden, sind auch vom Stand der Technik abweichende Regeneriertechniken der aufgewirbelten Filterschicht möglich. So wird gemäß einer vorteilhaften Ausführungsform der Erfindung vorgeschlagen, beim Regenerieren der Filterschicht die mit Feststoffen und/oder emulgierten Tröpfchen angereicherte Flüssigkeit schlagartig aus dem Filterbehälter abzulassen. Zweckmäßigerweise wird die Flüssigkeit über ein dem Sieb nachgeschaltetes Ablaufrohr schlagartig abgesaugt. Eine andere bevorzugte Regeneriermöglichkeit besteht darin, den Gasdruck im Filterbehälter zu erhöhen.

Wird das Verfahren zur Emulsionsspaltung eingesetzt, so wird die Filterschicht beim Regenerieren bevorzugt einer Extraktion unterworfen. Es ist auch möglich, die Filterschicht zu verwerfen und durch eine neue zu ersetzen. Die Filterschicht kann auch wie bei der Fest-Flüssig-Trennung durch Aufwirbeln der Filterschicht regeneriert werden, wobei die auf den Filterteilchen abgeschiedenen Emulsionströpfchen in die Flüssigkeit übergehen. Die in die Flüssigkeit übergegangenen Emulsionströpfchen schwimmen meist auf der Flüssigkeit auf, da sie in der Regel ein geringeres spezifisches Gewicht als die Flüssigkeit aufweisen. Dies ist z.B. bei Öl-Wasser-Emulsionen der Fall. Die Emulsionströpfchen können anschließend von der Flüssigkeit abdekantiert werden.

Da die erfindungsgemäß eingesetzten Filterteilchen ein besonders hohes Adsorptionsvermögen hinsichtlich der Emulsionströpfchen besitzen, kann mit dem vorgeschlagenen Verfahren eine große Menge an Emulsionströpfchen in einer kleinen Menge an Regenerierflüssigkeit konzentriert werden. Dadurch wird das Abdekantieren der Emulsionströpfchen von der Regenerierflüssigkeit wesentlich erleichtert.

Mit dem erfindungsgemäßen Verfahren können alle denkbaren Emulsionen gespalten werden. Insbesondere eignet es sich zur Spaltung von Kohlenwasserstoff-Wasser-Emulsionen. Beispielsweise können bei der Erdölgewinnung auftretende Öl-Wasser-Emulsionen gespalten werden.

Das Verfahren kann aber auch z.B. bei einer Bekämpfung von Kohlenwasserstoffschadensfällen eingesetzt werden. Insbesondere können mit Öl kontaminierte Flüssigkeiten mit dem Verfahren behandelt werden, um eine Abtrennung des Öls von der Flüssigkeit zu erreichen.

Gemäß einer Weiterbildung des Erfindungsgedankens werden solche Filterteilchen verwendet, die an der Oberfläche ein thermisch geglättetes Vliesmaterial mit einer Mikro-Restvliesstruktur aufweisen. Derartige Filterteilchen sehen makroskopisch betrachtet wie eine glatte, undurchsichtige Kompaktfolie aus, besitzen aber eine Mikro-Restvliesstruktur mit Verästelungen und Durchtrittsöffnungen.

Vorzugsweise werden Filterteilchen verwendet, deren thermisch geglättete Vliesoberfläche filamentöse Verästelungen mit Filamentdurchmessern im Bereich von 5 bis 500 µm und Durchtrittsöffnungen im Bereich von 1 bis 1000 µm besitzt.

Die thermisch geglättete Vliesoberfläche der Filterteilchen bewirkt, daß auch Feststoffe mit geringen Teilchendurchmessern von den Filterteilchen aufgenommen werden können. Andererseits verleiht die thermisch geglättete Vliesoberfläche den Filterteilchen die notwendige mechanische Stabilität, um auch turbulente Regeneriervorgänge unbeschadet überstehen zu können.

Als Vliesmaterial wird bevorzugt Kunststoff auf PE- und/oder PP-Basis verwendet. Das thermisch geglättete Vlies kann auf folgende Weise hergestellt werden: Vliesstoffbahnen werden durch erhitzte rotierende Metallwalzen geführt und dabei zusammengepreßt, wobei die Filamente in hohem Maße miteinander verschmelzen

Zweckmäßigerweise werden Filterteilchen verwendet, die aus einer Trägerfolie bestehen, auf die das thermisch geglättete Vliesmaterial aufgebracht ist. Eine weitere bevorzugte Ausführungsform der Erfindung sieht vor, solche Filterteilchen mit thermisch geglätteter Vliesoberfläche einzusetzen, die in einem zweiten Arbeitsgang nochmals bevliest wurden.

Zusätzlich oder alternativ können die verwendeten Filterteilchen einer Korona-Behandlung unterzogen worden sein. Hierbei handelt es sich um eine elektrische Entladung, bei der Ozon freigesetzt wird, das wiederum die Matrix des Teilchenmaterials angreift und freie Valenzen schafft. Auf diese Weise werden die elektrischen Eigenschaften der Teilchenoberfläche verändert, so daß sich die Feststoffe auf der Oberfläche leichter festsetzen können und/oder die emulgierten Tröpfchen leichter auf der Oberfläche abgeschieden werden können.

Eine andere Variante der Erfindung sieht vor, Filterteilchen zu verwenden, die einer Behandlung mit β-Strahlen unterzogen wurden. Vorteilhaft ist auch die Verwendung flammperforierter Filterteilchen, bei denen mittels einer Flamme Löcher in die Filterteilchen eingeschmolzen wurden.

Eine weitere Steigerung der Filtrationswirkung kann gemäß einer Weiterbildung des Erfindungsgedankens dadurch erreicht werden, daß mit Aktivkohle, Zeolithen oder Titandioxid dotierte Filterteilchen verwendet werden.

Um eine zusätzliche simultane biologische Reinigung der Flüssigkeit zu ermöglichen wird in einer besonders bevorzugten Ausführungsform der Erfindung Biomasse auf die Filterteilchen aufgebracht, oder es wird ein spontanes Aufwachsen von Biomasse ermöglicht. Die erfindungsgemäß verwendeten Filterteilchen bieten nämlich ideale Voraussetzungen für die Ansiedlung von Mikroorganismen. Aufgrund der großen Oberfläche der Filterteilchen und der Beweglichkeit der Filterteilchen in der Filterschicht wird eine hohe biologische Reinigungsleistung erreicht.

Insbesondere kann das erfindungsgemäße Filtrationsverfahren für eine simultane Rest-Denitrifikation von Abwasser oder Trinkwasser eingesetzt werden. Hierzu werden in der Filterschicht anoxische Bedingungen aufrechterhalten. Außerdem kann z.B. Acetol (CH₃OH) zugegeben werden, um die Denitrifikation in Gang zu setzen. Eine andere Möglichkeit besteht darin, eine Rest-Nitrifikation durchzuführen, wobei die Filterschicht zumindest partiell mit einem sauerstoffhaltigen Gas begast wird.

Das erfindungsgemäße Verfahren weist eine ganze Reihe von Vorteilen auf:

Da die Struktur der Filterschicht eine höhere Filterbeschickung zuläßt, können sich gegenüber Sandfiltern Investitionskosteneinsparungen von bis zu 40 % ergeben. Weitere Einsparungen lassen sich durch die leichtere Bauweise und die schwächeren Regenerieraggregate erzielen. Bei der Filterregenerierung lassen sich die Energiebetriebskosten um mindestens 40 % senken. Das Filtermaterial kann auch ohne großen Aufwand für die Umrüstung bestehender Filtereinheiten eingesetzt werden und ist bestens für eine simultane Nachdenitrifikation geeignet. Dies wirkt sich besonders vorteilhaft bei einer Nachrüstung von Kläranlagen aus.

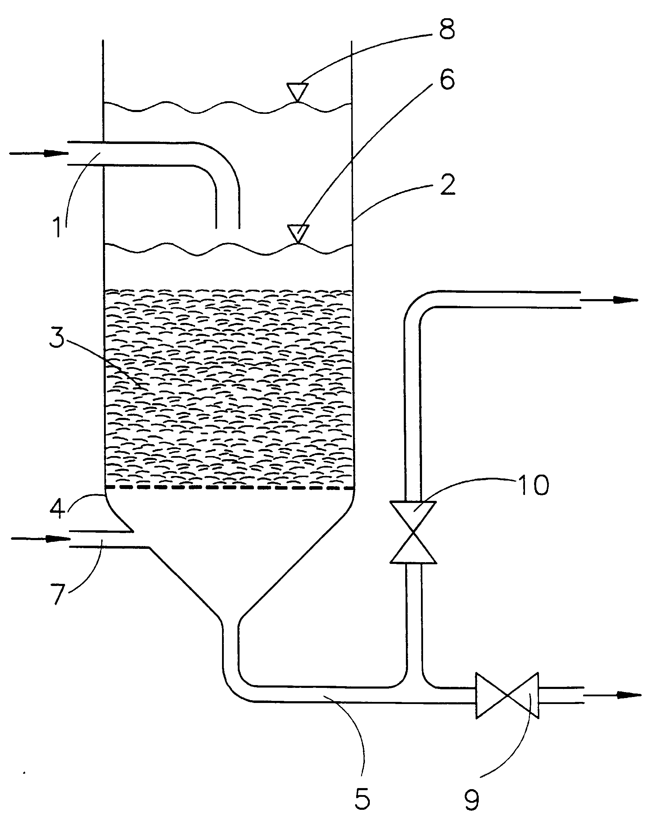

Im folgenden soll die Erfindung anhand eines in der Figur schematisch dargestellten Ausführungsbeispiels näher erläutert werden.

Über einen Zulauf 1 wird zu filtrierendes Abwasser in den Filterbehälter 2 eingeleitet. Im Filterbehälter 2 ist eine Filterschicht 3 aus losen gegeneinander leicht beweglichen Filterteilchen angeordnet. Als Filterteilchen werden im wesentlichen planare Teilchen mit einer Dicke von ca 500 µm und einer Fläche von ca. 100 mm² verwendet. Die Filterteilchen weisen ein Flächengewicht von ca. 30 g/m² auf. Die Filterteilchen bestehen aus einer Trägerfolie aus Polypropylen, auf die ein thermisch geglättetes Vliesmaterial mit einer Mikro-Restvliesstruktur aufgebracht ist. Die Mikro-Restvliesstruktur weist filamentöse Verästelungen mit Filamentdurchmessern von ca. 10 µm und Durchtrittsöffnungen von ca. 100 µm auf. Im unteren Bereich des Filterbehälters 2 ist ein Siebboden 4 angeordnet, der die Filterschicht 3 im Filterbehälter 2 zurückhält. Unterhalb des Siebbodens 4 ist ein Ablaufrohr 5 angeordnet, über das die filtrierte Flüssigkeit abgezogen wird. Die so beschriebene Filtrationseinheit wird als sogenanntes überstautes Filter betrieben, das heißt der Flüssigkeitsspiegel 6 befindet sich während des Filtriervorgangs oberhalb der Filterschicht 3.

Beim Regenerieren der Filterschicht 3 wird das Ablaufrohr 5 mittels eines Ventils 10 abgesperrt und Regenerierluft über eine Gaszuleitung 7 in den unteren Bereich des Filterbehälters 2 eingeleitet. Dies hat zur Folge, daß die Filterteilchen in der Filterschicht 3 aufgewirbelt werden und die auf den Filterteilchen abgesetzten Feststoffe in die Flüssigkeit übergehen. Außerdem wird der Flüssigkeitsspiegel auf einen Regenerierflüssigkeitsspiegel 8 angehoben. Anschließend wird ein Ventil 9 in einer Abzweigung des Ablaufs 5 geöffnet und die mit Feststoffen beladene Flüssigkeit schlagartig aus dem Filterbehälter 2 abgelassen.

Im Vergleich zu konventionellen Sandfiltern können mit dem erfindungsgemäßen Filtrationsverfahren erhebliche Energiekosten eingespart werden. Beim Sandfilter beträgt der Gegendruck während des Regenerierens bei einer Schütthöhe der Filterschicht von 1,5 m und einer Gesamthöhe des Filterbehälters von 3 m 0.45 bar (4,6 WS). Dagegen beträgt der Gegendruck beim erfindungsgemäßen Verfahren aufgrund des geringeren spezifischen Gewichts der Filterteilchen nur 0.29 bar (3 WS). Somit lassen sich ca. 35 % Verdichter- und Förderarbeit einsparen. Die Beladungskapazität der Filterschicht beträgt beim erfindungsgemäßen Verfahren ca. 15 kg Trockensubstanz pro Kubikmeter. Sie ist damit etwa um den Faktor 3 höher als bei Sandfiltern. Entsprechend kann auch die Filterlaufzeit verlängert werden. Somit ergeben sich in Folge der weniger häufigen Regenerierereignisse zusätzliche Energieeinsparungen.

## Patentansprüche

1. Verfahren zur Fest-Flüssig-Trennung von feststoffhaltigen Flüssigkeiten und/oder zur Spaltung von Emulsionen, wobei die feststoffhaltige Flüssigkeit und/oder Emulsion durch eine aus im wesentlichen planaren Filterteilchen mit einer Fläche von ca. 5 mm² bis ca. 1000 mm² bestehende Filterschicht (3) hindurch geleitet wird, die in einem Filterbehälter (2) mittels mindestens eines Siebes (4) zurückgehalten wird, wobei zumindest ein Großteil der Feststoffe und/oder emulgierter Tröpfchen auf den Filterteilchen abgeschieden wird, während die verbleibende Flüssigkeit nach Passieren der Filterschicht (3) über das Sieb (4) aus dem Filterbehälter (2) abgezogen wird, dadurch gekennzeichnet, daß aus leicht fluidisierbaren, folienartigen Filterteilchen mit einer Dicke von ca. 15 µm bis ca. 500 µm und einem Flächengewicht von ca. 10 bis 500 g/m² eine lose Filterschicht (3) aus gegeneinander leicht beweglichen Filterteilchen gebildet wird.

2. Verfahren nach Anspruch 1, **dadurch gekennzeichnet** daß zum Regenerieren der Filterschicht (3) der Abzug der Flüssigkeit aus dem Filterbehälter (2) zunächst unterbrochen wird, anschließend die Filterteilchen aufgewirbelt werden, wobei zumindest ein Großteil der Feststoffe und/oder emulgierten Tröpfchen in die Flüssigkeit übergeht, und anschließend die mit Feststoffen und/oder emulgierten Tröpfchen angereicherte Flüssigkeit aus dem Filterbehälter (2) abgezogen wird und die mit Feststoffen und/oder emulgierten Tröpfchen angereicherte Flüssigkeit schlagartig aus dem Filterbehälter (2) abgelassen wird.

3. Verfahren nach Anspruch 2, **dadurch gekennzeichnet**, daß die mit Feststoffen und/oder emulgierten Tröpfchen angereicherte Flüssigkeit über ein dem Sieb (4) nachgeschaltetes Ablaufrohr (5) schlagartig abgesaugt wird.

4. Verfahren nach Anspruch 2 oder 3, **dadurch gekennzeichnet**, daß der Gasdruck im Filterbehälter (2) erhöht wird.

5. Verfahren nach einem der Ansprüche 1 bis 4, **dadurch gekennzeichnet**, daß die mit emulgierten Tröpfchen beladenen Filterteilchen einer Extraktion unterzogen werden.

6. Verfahren nach einem der Ansprüche 1 bis 5, **dadurch gekennzeichnet**, daß Filterteilchen verwendet werden, die an der Oberfläche ein thermisch geglättetes Vliesmaterial mit einer Mikro-Restvliesstruktur aufweisen.

7. Verfahren nach einem der Ansprüche 1 bis 6, **dadurch gekennzeichnet**, daß Filterteilchen verwendet werden, die an der Oberfläche ein thermisch geglättetes Vliesmaterial aufweisen, welches filamentöse Verästelungen mit Filamentdurchmessem im Bereich von 5 bis 500 µm und Durchtrittsöffnungen im Bereich von 1 bis 1000 µm besitzt.

8. Verfahren nach Anspruch 7, **dadurch gekennzeichnet**, daß Filterteilchen verwendet werden, die aus einer Trägerfolie bestehen, auf die das thermisch geglättete Vliesmaterial aufgebracht ist.

9. Verfahren nach einem der Ansprüche 1 bis 8, **dadurch gekennzeichnet**, daß Filterteilchen verwendet werden, die einer Korona-Behandlung unterzogen wurden.

10. Verfahren nach einem der Ansprüche 1 bis 9, **dadurch gekennzeichnet**, daß Filterteilchen verwendet werden, die einer Behandlung mit β-Strahlen unterzogen wurden.

11. Verfahren nach einem der Ansprüche 1 bis 10, **dadurch gekennzeichnet**, daß flammperforierte Filterteilchen verwendet werden.

12. Verfahren nach einem der Ansprüche 1 bis 11, **dadurch gekennzeichnet**, daß Filterteilchen mit thermisch geglätteter Vliesoberfläche verwendet werden, die in einem zweiten Arbeitsgang nochmals bevliest wurden.

13. Verfahren nach einem der Ansprüche 1 bis 12, **dadurch gekennzeichnet**, daß mit Aktivkohle, Zeolithen oder Titandioxid dotierte Filterteilchen verwendet werden.

14. Verfahren nach einem der Ansprüche 1 bis 13, **dadurch gekennzeichnet**, daß auf die Filterteilchen Biomasse aufgebracht wird, oder ein spontanes Aufwachsen von Biomasse ermöglicht wird.

15. Verfahren nach Anspruch 14, **dadurch gekennzeichnet**, daß in der Filterschicht (3) anoxische Bedingungen für eine simultane biologische Denitrifikation aufrechterhalten werden.

16. Verfahren nach Anspruch 14, **dadurch gekennzeichnet**, daß während der Filtration die Filterschicht (3) zumindest partiell begast wird und eine simultane biologische Nitrifikation durchgeführt wird.

## Claims

1. Process for the solid-liquid separation of solids-containing liquids and/or for breaking emulsions, the solids-containing liquid and/or emulsion being passed through a filter layer (3) which consists of essentially planar filter particles having a surface area of from approximately 5 mm² to approximately 1000 mm², which filter layer is retained in a filter vessel (2) by at least one screen (4), at least a large part of the solids and/or emulsified droplets being separated off on the filter particles, while the remaining liquid is taken off from the filter vessel (2) after passing through the filter layer (3) via the screen (4), characterized in that a loose filter layer (3) of filter particles which can readily move with respect to one another is formed from readily fluidizable, film-like filter particles having a thickness from approximately 15 µm to approximately 500 µm and a weight per unit area from approximately 10 to 500 g/m².

2. Process according to Claim 1, characterized in that, to regenerate the filter layer (3), the liquid takeoff from the filter vessel (2) is first interrupted, the filter particles are then fluidized, at least a large part of the solids and/or emulsified droplets passing over into the liquid, and the solids-and/or emulsified-droplets-enriched liquid then being taken off from the filter vessel, and the solids-and/or emulsified-droplet-enriched liquid being discharged abruptly from the filter vessel (2).

3. Process according to Claim 2, characterized in that the solids- and/or emulsified-droplets-enriched liquid is removed by suction abruptly via an outlet tube (5) connected downstream of the screen (4).

4. Process according to Claim 2 or 3, characterized in that the gas pressure in the filter vessel (2) is elevated.

5. Process according to one of Claims 1 to 4, characterized in that the filter particles which are loaded with emulsified droplets are subjected to an extraction.

6. Process according to one of Claims 1 to 5, characterized in that filter particles are used which, on the surface, have a thermally calendered web material having a micro residual web texture.

7. Process according to one of Claims 1 to 6, characterized in that filter particles are used which, on the surface, have a thermally calendered web material, which has filamentous branchings having filament diameters in the range from 5 to 500 µm and throughholes in the range from 1 to 1000 µm.

8. Process according to Claim 7, characterized in that filter particles are used which consist of a base film onto which the thermally calendered web material is applied.

9. Process according to one of Claims 1 to 8, characterized in that filter particles are used which have been subjected to a corona treatment.

10. Process according to one of Claims 1 to 9, characterized in that filter particles are used which have been subjected to a treatment with β rays.

11. Process according to one of Claims 1 to 10, characterized in that flame-perforated filter particles are used.

12. Process according to one of Claims 1 to 11, characterized in that filter particles having a thermally calendered web surface are used, which particles have again been web-covered in a second operation.

13. Process according to one of Claims 1 to 12, characterized in that filter particles doped with activated carbon, zeolites or titanium dioxide are used.

14. Process according to one of Claims 1 to 13, characterized in that biomass is applied to the filter particles, or a spontaneous growth of biomass is made possible.

15. Process according to Claim 14, characterized in that, in the filter layer (3), anoxic conditions are maintained for a simultaneous biological denitrification.

16. Process according to Claim 14, characterized in that, during the filtration, the filter layer (3) is at least partially gas-treated and a simultaneous biological nitrification is carried out.

## Revendications

1. Procédé pour la séparation solide/liquide de liquides contenant des solides et/ou pour la dissociation d'émulsions, dans lequel le liquide contenant des solides et/ou l'émulsion sont conduits au travers d'une couche filtrante (3) essentiellement constituée de particules filtrantes planes ayant une surface d'environ 5 mm² à environ 1000 mm² qui est retenue dans un récipient filtrant (2) au moyen d'au moins un tamis (4), au moins une majeure partie des solides et/ou des gouttelettes émulsionnées étant déposées sur les particules filtrantes, pendant que le liquide restant est soutiré du récipient filtrant (2) après le passage de la couche filtrante (3) au tamis (4), caractérisé en ce qu'à partir de particules filtrantes légèrement fluidisables et ressemblant à une feuille ayant une épaisseur d'environ 15 µm à environ 500 µm et un grammage d'environ 10 à 500 g/m², une couche filtrante (3) amovible de particules filtrantes se déplaçant légèrement les unes par rapport aux autres est formée.

2. Procédé suivant la revendication 1 caractérisé en ce que, pour la régénération de la couche filtrante (3), on interrompt d'abord le soutirage du liquide du récipient filtrant (2), puis on soulève en tourbillons les particules filtrantes, au moins une majeure partie des solides et/ou des gouttelettes émulsionnées se dissolvant dans le liquide, puis on soutire du récipient filtrant (2) le liquide enrichi de solides et/ou de gouttelettes émulsionnées, et le liquide enrichi de solides et/ou de gouttelettes émulsionnées est évacué de manière soudaine du récipient filtrant (2).

3. Procédé suivant la revendication 2, caractérisé en ce que le liquide enrichi de solides et/ou de gouttelettes émulsionnées est aspiré de manière soudaine par un tube d'écoulement (5) en aval du tamis (4).

4. Procédé suivant la revendication 2 ou 3, caractérisé en ce que la pression de gaz est augmentée dans le récipient filtrant (2).

5. Procédé suivant l'une quelconque des revendications 1 à 4, caractérisé en ce que les particules filtrantes chargées de gouttelettes émulsionnées subissent une extraction.

6. Procédé suivant l'une quelconque des revendications 1 à 5, caractérisé en ce qu'on utilise des particules filtrantes qui présentent en surface un matériau nappé thermiquement égalisé présentant une structure nappée microrésiduelle.

7. Procédé suivant l'une quelconque des revendications 1 à 6, caractérisé en ce qu'on utilise des particules filtrantes qui présentent en surface un matériau nappé thermiquement égalisé, lequel possède des ramifications filamenteuses avec des diamètres de filament dans l'intervalle de 5 à 500 µm et des ouvertures de pénétration dans l'intervalle de 1 à 1000 µm.

8. Procédé suivant la revendication 7, caractérisé en ce qu'on utilise des particules filtrantes qui sont constituées d'une pellicule de support sur laquelle le matériau nappé thermiquement égalisé est appliqué.

9. Procédé suivant l'une quelconque des revendications 1 à 8, caractérisé en ce qu'on utilise des particules filtrantes qui subissent un traitement par corona.

10. Procédé suivant l'une quelconque des revendications 1 à 9, caractérisé en ce qu'on utilise des particules filtrantes qui subissent un traitement par rayons β.

11. Procédé suivant l'une quelconque des revendications 1 à 10, caractérisé en ce qu'on utilise des particules filtrantes perforées à la flamme.

12. Procédé suivant l'une quelconque des revendications 1 à 11, caractérisé en ce qu'on utilise des particules filtrantes avec une surface nappée thermiquement égalisée, qui sont une nouvelle fois nappées dans une deuxième opération.

13. Procédé suivant l'une quelconque des revendications 1 à 12, caractérisé en ce qu'on utilise des particules filtrantes dopées au charbon actif, aux zéolites ou au dioxyde de titane.

14. Procédé suivant l'une quelconque des revendications 1 à 13, caractérisé en ce qu'on applique sur les particules filtrantes une biomasse ou en ce qu'on permet une épitaxie spontanée de biomasse.

15. Procédé suivant la revendication 14, caractérisé en ce qu'on maintient dans la couche filtrante (3) des conditions anoxiques pour une dénitrification biologique simultanée.

16. Procédé suivant la revendication 14, caractérisé en ce que, pendant la filtration de la couche filtrante (3), on procède à un gazage au moins partiel et on réalise une nitrification biologique simultanée.
